# EUROPEAN PATENT SPECIFICATION

(11) **EP 4 079 660 B1**
(45) Date of publication and mention of the grant of the patent: **09.04.2025**
(21) Application number: 22168986.2
(22) Date of filing: 20.04.2022
(51) Int. Cl.: B65G 13/10

(54) **MODULE FOR A SORTING AND TRANSPORT LINE**
MODUL FÜR EINE SORTIER- UND TRANSPORTSTRASSE
MODULE POUR UNE LIGNE DE TRI ET DE TRANSPORT

(30) Priority: 21.04.2021 IT 202100010109
(43) Date of publication of application: 26.10.2022
(73) Proprietor: Mechatronic Machine & Systems S.r.l. in forma abbreviata MMS S.r.l., 27010 Vellezzo Bellini PV (IT)
(72) Inventor: Bolsieri, Giampiero, 27010 Vellezzo Bellini PV (IT); Bolsieri, Fabrizio, 27010 Vellezzo Bellini PV (IT)
(74) Representative: Rondano, Davide

(56) References cited:
- FR-A1- 2 852 940
- IT-A1- 201900 002 133
- KR-B1- 101 753 252
- US-B1- 9 248 981

## Description

### Technical field of the invention

The present invention relates generally to the field of sorting and transport lines, in particular parcel sorting and transport lines. More specifically, the present invention relates to a module for a sorting and transport line, as well as to a sorting and transport line comprising a plurality of such modules.

### State of the art

Modules for sorting and transport lines comprising a plurality of rollers configured to impart a certain direction of travel to a parcel to be transported or sorted are known. The combination of one or more of these modules creates a transport or sorting surface which allows to handle parcels along to a predetermined path.

A first example of these modules, the module produced by the company cellumation GmbH under the trade name *celluveyor,* comprises three rollers arranged at 120° to each other and at the same distance from a central axis of the module, with the respective axes of rotation passing through this central axis of the module. Each roller is driven into rotation by a respective electric motor through a respective transmission system comprising a driving pulley, a driven pulley drivingly connected with the roller and a transmission belt wound about the driving pulley and the driven pulley. By varying the relative rotational speed between the pulleys, it is possible to locally vary the direction of travel of a parcel passing over such module.

A second example of these modules, the module produced by the company FlowSort B.V. under the trade name TWISTSORTER TS-24, comprises a support structure and a plurality of movable bodies carried by the support structure so as to be each rotatable about a respective vertical axis of rotation, wherein each movable body comprises four rollers, the axes of rotation of which are directed parallel to each other, and a driving unit for driving the rollers into rotation about the respective axes of rotation. By varying the orientation of the movable bodies with respect to the support structure about the respective vertical axes of rotation, the direction of travel of the parcel passing over the module is varied.

However, both the known solutions illustrated above are not well suited to the sorting and transport of parcels of small size and/or irregular shape.

Another example of a module for a sorting and transport line is known from IT 2019 0000 2133 A1. This known module comprises a first driving system for driving the rollers into rotation about the respective horizontal axes of rotation and a second driving system for driving the roller assemblies into rotation about the respective vertical axes of rotation. The first driving system comprises elastic transmission belts for transmitting the motion from a first electric motor to each roller, while the second driving system comprises a gear wheel meshing with outer teeth of the roller assemblies for transmitting the motion from a second electric motor, which has a drive shaft coaxial with the axis of rotation of said gear wheel, to the roller assemblies. According to this known solution. the first electric motor is arranged outside the modules and drives the elastic transmission belts through a rotary shaft which transmits by friction the rotary motion to a plurality of pulleys on which the elastic transmission belts are wound.

### Summary of the invention

It is an object of the present invention to provide a module for a sorting and transport line which is improved over the state of the art discussed above.

This and other objects are fully achieved by a module for a sorting and transport line as defined in the attached independent claim 1.

Preferred embodiments of the sorting and transport module according to the present invention form the subject-matter of the dependent claims.

Further features of the present invention will be apparent from the following detailed description, which is given for illustrative and non-limiting purposes only.

### Brief description of the figures

In the following detailed description of the invention, reference will be made to the figures of the accompanying drawings, in which:
- Figure 1 schematically shows a perspective view of a module for a sorting and transport line according to an embodiment of the present invention;
- Figures 2 to 4 schematically show a front view, a side view and a top view, respectively, of the module of Figure 1;
- Figure 5 schematically shows a detail of the module of Figure 1 representing a roller and a portion of an elastic belt; and

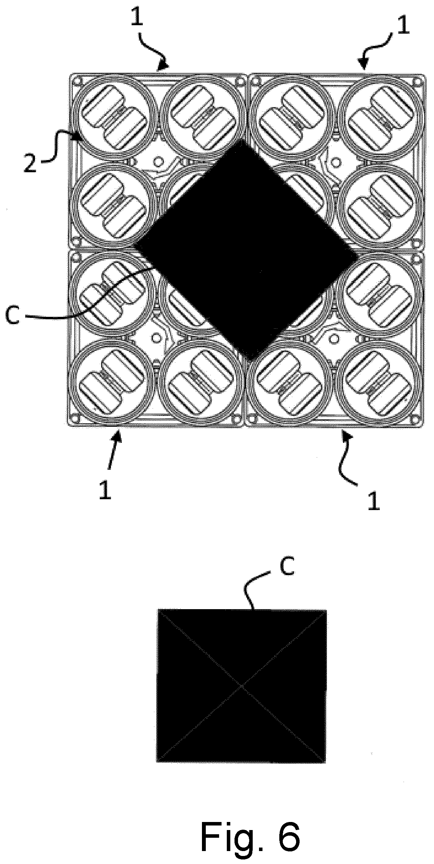

- Figure 6 schematically shows a sorting and transport line comprising four modules according to Figure 1.

### Detailed description

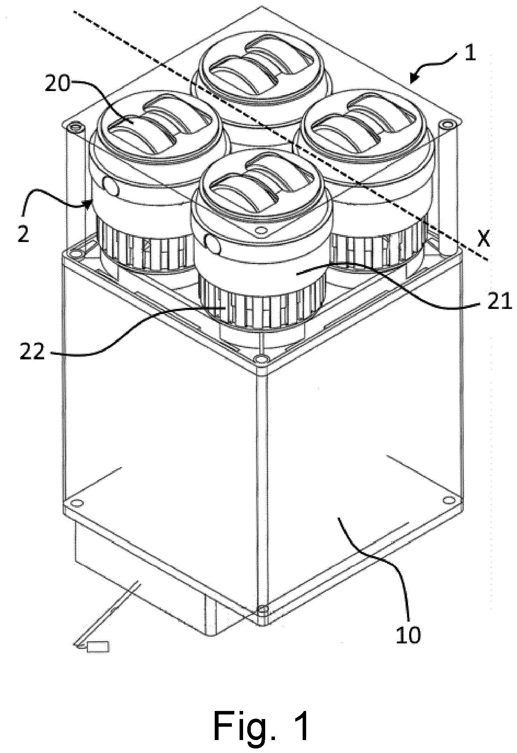

Referring initially to Figures 1 to 4, a module for a sorting and transport line configured to handle parcels C along a sorting and transport plane P is generally indicated 1.

The module 1 comprises a box-like casing 10, substantially in the shape of a parallelepiped, and four roller assemblies 2 mounted on that box-like casing 10, arranged on an upper base of the box-like casing 10 parallel to the plane P.

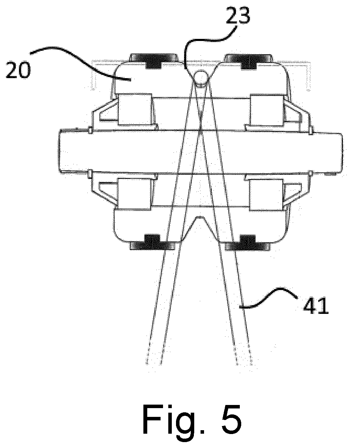

Each roller assembly 2 comprises a roller 20 and a support body 21. Each roller 20 is configured to rotate about a respective axis of rotation Ya, Yb, Yc, Yd parallel to the sorting and transport plane P. An upper portion of the support body 21 supports the respective roller 20 for rotation about the respective axis of rotation Ya, Yb, Yc, Yd. Referring to Figure 5, each roller 20 is preferably a double roller, i.e. a pair of cylindrical surfaces capable of dragging the parcel by friction. Each cylindrical surface is coated with a friction material (e.g. rubber).

Furthermore, the roller assemblies 2 are configured to rotate about a respective axis of rotation Za, Zb, Zc, Zd perpendicular to the sorting and transport plane P.

Each roller group 20 comprises first and second driving means. The first driving means are configured to control, synchronously and in the same direction, the rotation of the rollers 20 about the respective axes of rotation Ya, Yb, Yc, Yd. On the other hand, the second driving means are configured to control, synchronously and in the same direction, the rotation of the roller assemblies 2 about the respective axes of rotation Za, Zb, Zc, Zd. In this way, by controlling, by means of these second driving means, the orientation of the roller assemblies about the respective axes of rotation, a forward direction X of the parcel C is defined along the sorting and transport plane P. This forward direction X is perpendicular to the axes of rotation Ya, Yb, Yc, Yd of the rollers 20. Furthermore, by controlling the rotation of the rollers about the respective axes of rotation, by means of the first driving means, the parcel C in contact with the rollers is caused to move forward along the forward direction X.

The support body 21 of each roller assembly 2 is provided with outer teeth 22 coaxial with the respective axis of rotation of the roller assembly 2. The first driving means comprise a gear wheel 31 which is rotatably mounted about an axis of rotation Zr, parallel to the axes of rotation Za, Zb, Zc, Zd of the roller assemblies 2, and which meshes with the outer teeth 22 of the roller assemblies 2. Finally, the first driving means also comprise a first electric motor 30 for driving the gear wheel 31 into rotation about the respective axis of rotation Zr. The electric motor 30 is arranged within the box-like casing 10 with its drive shaft coaxial with the axis of rotation Zr of the gear wheel 31. The axis of rotation Zr of the gear wheel 31 is substantially at the same distance from the axes of rotation Za, Zb, Zc, Zd. The first electric motor 30 is configured to rotatably drive the gear wheel 31 in such a manner as to impart to each roller assembly 2 a rotation in a range of substantially ±90° about the respective axis of rotation.

The second driving means comprise a second electric motor 40 and a plurality of elastic transmission belts 41 each configured to transmit the rotational motion from the second electric motor 40 to the roller 20 of a respective roller assembly 2. More specifically, referring to Figure 5, the roller 20 preferably comprises a seat 23 within which a portion of the elastic transmission belt is housed. The cross-section of this belt 41 is preferably circular.

The support body 21, an upper portion of which supports the roller 20 for rotation about the respective axis of rotation, is hollow and each of the elastic transmission belts 41 extends within the support body 21 of the respective roller assembly 2. The second electric motor 40 is arranged within the box-like casing 10 at a lower portion of this casing. More specifically, the first electric motor 30 is arranged between the second electric motor 40 and the roller assemblies 2. This solution is particularly advantageous in that the transmission of the rotational motion from the second electric motor 40 to each of the rollers 20 is not hindered by the rotational motion of the roller assemblies 2 about the respective axes of rotation Za, Zb, Zc, Zd.

The second driving means further comprise a first shaft 42a about which are wound a first and a second elastic transmission belts 41 of the plurality of elastic transmission belts 41, respectively, said first and second elastic transmission belts being associated with a first one and a second one of said four roller assemblies 2, respectively, and a second shaft 42b about which are wound a third and a fourth elastic transmission belts 41 of the plurality of elastic transmission belts 41, respectively, said third and fourth elastic transmission belts being associated with a third one and a fourth one of said four roller assemblies, respectively. The first and second shafts 42a, 42b are rotatably mounted about respective axes of rotation parallel to each other and parallel to the sorting and transport plane P and are connected to the second motor 40 to be driven into rotation by the latter synchronously and in the same direction. More particularly, the second motor 40 drives into rotation the first and second shafts 42a, 42b by means of first and second transmission belts 43 with a rectangular cross-section, which connect the first and second shafts 42a, 42b, respectively, to a drive shaft of the second motor 40.

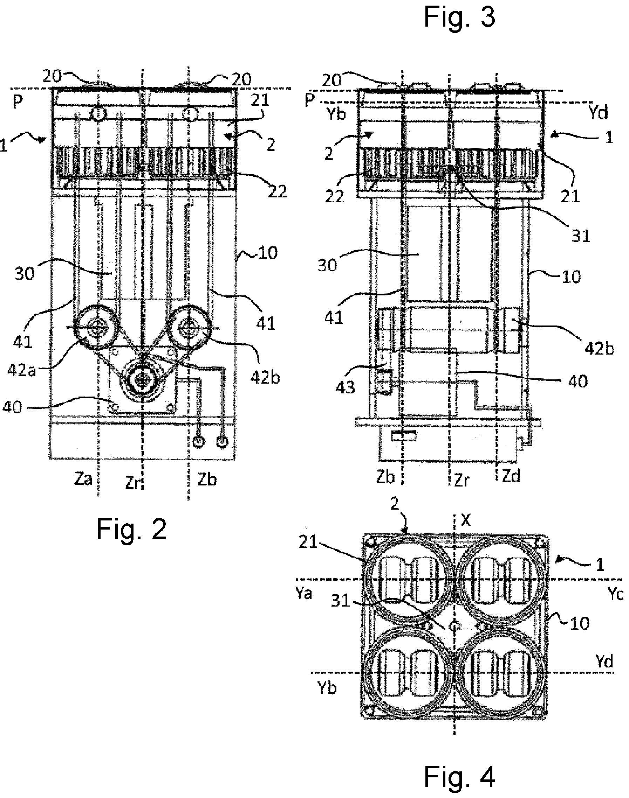

Referring now to Figure 4, a line for sorting and transporting parcels C may be obtained by arranging next to each other a plurality of modules 1 as described above. In Figure 4, only four modules 1 arranged in a square are shown, but it is evident that the sorting and transport line may comprise a larger number of modules 1. By appropriately controlling the orientation of the roller assemblies 2 about the respective axes of rotation Za, Zb, Zc, Zd and the rotation speed of the rollers 20 about the respective axes of rotation Ya, Yb, Yc, Yd, it is possible to make each parcel follow a given path.

The present invention has been described herein with reference to a preferred embodiment thereof. It is to be understood that other embodiments may be envisaged, which share the same inventive core with the one described herein, as defined by the scope of protection of the claims below.

## Claims

1. Module (1) for a sorting and transport line configured to handle parcels (C) along a sorting and transport plane (P), said module (1) comprising:
- a plurality of roller assemblies (2), wherein each roller assembly (2) comprises at least one roller (20) configured to rotate about a respective axis of rotation (Ya, Yb, Yc, Yd) parallel to said sorting and transport plane (P), wherein each roller assembly (2) is configured to rotate about a respective axis of rotation (Za, Zb, Zc, Zd) perpendicular to said sorting and transport plane (P);
- a box-like casing (10), substantially in the shape of a parallelepiped, said roller assemblies (2) being arranged at an upper base of said box-like casing (10);
- first driving means (40, 41, 42a, 42b, 43) configured to control, synchronously and in the same direction, the rotation of the rollers (20) about the respective axes of rotation (Ya, Yb, Yc, Yd); and
- second driving means (30, 31) configured to control, synchronously and in the same direction, the rotation of the roller assemblies (2) about the respective axes of rotation (Za, Zb, Zc, Zd);
in such a manner that by controlling, by means of said second driving means (30, 31), the orientation of the roller assemblies (2) about the respective axes of rotation (Za, Zb, Zc, Zd), a forward direction (X) of the parcel (C) along said sorting and transport plane (P) is defined and by controlling, by means of said first driving means (40, 41, 42a, 42b, 43), the rotation of the rollers (20) about the respective axes of rotation (Ya, Yb, Yc, Yd), the parcel (C) in contact with the rollers (20) is caused to move forward along said forward direction (X), wherein each roller assembly (2) comprises a support body (21), an upper portion of which supports said at least one roller (20) for rotation about the respective axis of rotation (Ya, Yb, Yc, Yd), wherein the support body (21) of each roller assembly (2) is provided with outer teeth (22) coaxial with the respective axis of rotation (Za, Zb, Zc, Zd) of the roller assembly (2),
wherein said first driving means (40, 41, 42a, 42b, 43) comprise a first electric motor (40) arranged within said box-like casing (10) at a lower portion of said casing and a plurality of elastic transmission belts (41), each configured to transmit a rotational motion from said first electric motor (40) to said at least one roller (20) of a respective roller assembly (20), and
wherein said second driving means (30, 31) comprise a gear wheel (31) which is rotatably mounted about an axis of rotation (Zr) parallel to the axes of rotation (Za, Zb, Zc, Zd) of the roller assemblies (2) and meshes with the outer teeth (22) of the roller assemblies (2), and a second electric motor (30) arranged within said box-like casing (10) for driving said gear wheel (31) in rotation about the respective axis of rotation (Zr), wherein said second electric motor (30) is arranged with a drive shaft thereof coaxial with the axis of rotation (Zr) of said gear wheel (31).

2. Module according to claim 1, wherein said second electric motor (30) is configured to drive said gear wheel (31) into rotation in such a manner as to impart to each roller assembly (2) a rotation in a range of substantially ±90° about the respective axis of rotation (Za, Zb, Zc, Zd).

3. Module according to any one of the preceding claims, wherein said support body (21) is hollow and each of said elastic transmission belts (41) extends within the support body (21) of the respective roller assembly (2).

4. Module according to claim 1 or claim 2, wherein said roller assemblies (2) are four in number, wherein said first driving means (40, 41, 42a, 42b, 43) further comprise a first shaft (42a) about which a first and a second elastic transmission belts of said plurality of elastic transmission belts (41) are wound, said first and second elastic transmission belts being associated with a first one and a second one of said four roller assemblies (2), respectively, and a second shaft (42b) about which a third and a fourth elastic transmission belts of said plurality of elastic transmission belts (41) are wound, said third and fourth elastic transmission belts being associated with a third one and a fourth one of said four roller assemblies (2), respectively, and wherein said first and second shafts (42a, 42b) are rotatably mounted about respective axes of rotation parallel to each other and parallel to said sorting and transport plane (P) and are connected to said first electric motor (40) to be driven into rotation by the latter synchronously and in the same direction.

5. Module according to any one of the preceding claims, wherein said second electric motor (30) is arranged between said second electric motor (40) and said roller assemblies (2), said axis of rotation (Zr) of said gear wheel (31) being substantially at the same distance from said axes of rotation (Za, Zb, Zc, Zd).

6. Line for sorting and transporting parcels (C), comprising a plurality of modules (1) according to any one of the preceding claims, arranged next to each other.

## Patentansprüche

1. Modul (1) für ein Sortier- und Transportband, das zum Handhaben von Paketen (C) entlang einer Sortier- und Transportebene (P) konfiguriert ist, wobei das Modul (1) umfasst:
- eine Vielzahl von Rollenbaugruppen (2), wobei jede Rollenbaugruppe (2) mindestens eine Rolle (20) umfasst, die konfiguriert ist, um sich um eine jeweilige Rotationsachse (Ya, Yb, Yc, Yd) parallel zu der Sortier- und Transportebene (P) zu drehen, wobei jede Rollenbaugruppe (2) konfiguriert ist, um sich um eine jeweilige Rotationsachse (Za, Zb, Zc, Zd) senkrecht zu der Sortier- und Transportebene (P) zu drehen;
- ein kastenförmiges Gehäuse (10), das im Wesentlichen die Form eines Parallelepipeds aufweist, wobei die Rollenbaugruppen (2) an einer oberen Basis des kastenförmigen Gehäuses (10) eingerichtet sind;
- erste Antriebsmittel (40, 41, 42a, 42b, 43), die konfiguriert sind, um die Drehung der Rollen (20) um die jeweiligen Drehachsen (Ya, Yb, Yc, Yd) synchron und in die gleiche Richtung zu steuern; und
- zweite Antriebsmittel (30, 31), die konfiguriert sind, um die Drehung der Rollenbaugruppen (2) um die jeweiligen Drehachsen (Za, Zb, Zc, Zd) synchron und in die gleiche Richtung zu steuern;
in einer solchen Weise, dass durch Steuern der Ausrichtung der Rollenbaugruppen (2) um die jeweiligen Drehachsen (Za, Zb, Zc, Zd) mittels der zweiten Antriebsmittel (30, 31) eine Vorwärtsrichtung (X) des Pakets (C) entlang der Sortier- und Transportebene (P) definiert wird und durch Steuern der Drehung der Rollen (20) um die jeweiligen Drehachsen (Ya, Yb, Yc, Yd) mittels der ersten Antriebsmittel (40, 41, 42a, 42b, 43) das mit den Rollen (20) in Kontakt stehende Paket (C) dazu veranlasst wird, sich entlang der Vorwärtsrichtung (X) vorwärts zu bewegen, wobei jede Rollenbaugruppe (2) einen Stützkörper (21) umfasst, dessen oberer Abschnitt die mindestens eine Rolle (20) zur Drehung um die jeweilige Drehachse (Ya, Yb, Yc, Yd) stützt, wobei der Stützkörper (21) jeder Rollenbaugruppe (2) mit äußeren Zähnen (22) versehen ist, die koaxial mit der jeweiligen Drehachse (Za, Zb, Zc, Zd) der Rollenbaugruppe (2) sind,
wobei die ersten Antriebsmittel (40, 41, 42a, 42b, 43) einen ersten Elektromotor (40) umfassen, der innerhalb des kastenartigen Gehäuses (10) an einem unteren Teil des Gehäuses eingerichtet ist, und eine Vielzahl elastischer Antriebsriemen (41), die jeweils konfiguriert sind, um eine Drehbewegung von dem ersten Elektromotor (40) auf die mindestens eine Rolle (20) einer jeweiligen Rollenanordnung (20) zu übertragen, und
wobei die zweiten Antriebsmittel (30, 31) ein Zahnrad (31) umfassen, das drehbar um eine Drehachse (Zr) parallel zu den Drehachsen (Za, Zb, Zc, Zd) der Rollenbaugruppen (2) montiert ist und mit den Außenzähnen (22) der Rollenbaugruppen (2) verzahnt ist, und einen zweiten Elektromotor (30), der innerhalb des kastenartigen Gehäuses (10) eingerichtet ist, um das Zahnrad (31) in Drehung um die jeweilige Drehachse (Zr) anzutreiben, wobei
der zweite Elektromotor (30) mit seiner Antriebswelle koaxial zur Drehachse (Zr) des Zahnrads (31) eingerichtet ist.

2. Modul nach Anspruch 1, wobei der zweite Elektromotor (30) konfiguriert ist, um das Zahnrad (31) derart in Drehung zu versetzen, dass jeder Rollenbaugruppe (2) eine Drehung in einem Bereich von im Wesentlichen ±90° um die jeweilige Drehachse (Za, Zb, Zc, Zd) verliehen wird.

3. Modul nach einem der vorstehenden Ansprüche, wobei der Trägerkörper (21) hohl ist und jeder der elastischen Antriebsriemen (41) innerhalb des Trägerkörpers (21) der jeweiligen Rollenbaugruppe (2) verläuft.

4. Modul nach Anspruch 1 oder Anspruch 2, wobei die Rollenbaugruppen (2) vier an der Zahl sind, wobei die ersten Antriebsmittel (40, 41, 42a, 42b, 43) ferner eine erste Welle (42a) umfassen, um die ein erster und ein zweiter elastischer Antriebsriemen der Vielzahl von elastischen Antriebsriemen (41) gewickelt sind, wobei der erste und der zweite elastische Antriebsriemen jeweils einer ersten und einer zweiten der vier Rollenbaugruppen (2) zugeordnet sind, und eine zweite Welle (42b), um die ein dritter und ein vierter elastischer Antriebsriemen der Vielzahl von elastischen Antriebsriemen (41) gewickelt sind, wobei der dritte und der vierte elastische Antriebsriemen jeweils einer dritten und einer vierten der vier Rollenbaugruppen (2) zugeordnet sind, und wobei die erste und die zweite Welle (42a, 42b) drehbar um jeweilige Drehachsen montiert sind, die parallel zueinander und parallel zu der Sortier- und Transportebene (P) verlaufen, und mit dem ersten Elektromotor (40) verbunden sind, um von diesem synchron und in die gleiche Richtung in Drehung versetzt zu werden.

5. Modul nach einem der vorstehenden Ansprüche, wobei der zweite Elektromotor (30) zwischen dem zweiten Elektromotor (40) und den Rollenbaugruppen (2) angeordnet ist, wobei die Drehachse (Zr) des Zahnrads (31) im Wesentlichen den gleichen Abstand zu den Drehachsen (Za, Zb, Zc, Zd) aufweist.

6. Band zum Sortieren und Transportieren von Paketen (C), umfassend eine Vielzahl von nebeneinander angeordneten Modulen (1) nach einem der vorstehenden Ansprüche.

## Revendications

1. Module (1) pour une ligne de tri et de transport configuré pour traiter des colis (C) le long d'un plan de tri et de transport (P), ledit module (1) comprenant :
- une pluralité d'ensembles rouleaux (2), dans lequel chaque ensemble rouleau (2) comprend au moins un rouleau (20) conçu pour tourner autour d'un axe de rotation respectif (Ya, Yb, Yc, Yd) parallèle audit plan de tri et de transport (P), dans lequel chaque ensemble rouleau (2) est conçu pour tourner autour d'un axe de rotation respectif (Za, Zb, Zc, Zd) perpendiculaire audit plan de tri et de transport (P) ;
- une carcasse de type boîte (10), sensiblement en forme de parallélépipède, lesdits ensembles rouleaux (2) étant disposés au niveau d'une base supérieure de ladite carcasse de type boîte (10) ;
- des premiers moyens d'entraînement (40, 41, 42a, 42b, 43) configurés pour commander, de manière synchrone et dans le même sens, la rotation des rouleaux (20) autour des axes de rotation respectifs (Ya, Yb, Yc, Yd) ; et
- des seconds moyens d'entraînement (30, 31) configurés pour commander, de manière synchrone et dans le même sens, la rotation des ensembles rouleaux (2) autour des axes de rotation respectifs (Za, Zb, Zc, Zd) ;
d'une manière telle qu'en commandant, au moyen desdits seconds moyens d'entraînement (30, 31), l'orientation des ensembles rouleaux (2) autour des axes de rotation respectifs (Za, Zb, Zc, Zd), une direction d'avancement (X) du colis (C) le long dudit plan de tri et de transport (P) est définie et en commandant, au moyen desdits premiers moyens d'entraînement (40, 41, 42a, 42b, 43), la rotation des rouleaux (20) autour des axes de rotation respectifs (Ya, Yb, Yc, Yd), le colis (C) en contact avec les rouleaux (20) est amené à avancer le long de ladite direction d'avancement (X), dans lequel chaque ensemble rouleau (2) comprend un corps de support (21), dont une partie supérieure supporte ledit au moins un rouleau (20) pour une rotation autour de l'axe de rotation respectif (Ya, Yb, Yc, Yd), dans lequel le corps de support (21) de chaque ensemble rouleau (2) est pourvu de dents externes (22) coaxiales avec l'axe de rotation respectif (Za, Zb, Zc, Zd) de l'ensemble rouleau (2),
dans lequel lesdits premiers moyens d'entraînement (40, 41, 42a, 42b, 43) comprennent un premier moteur électrique (40) disposé à l'intérieur de ladite carcasse de type boîte (10) au niveau d'une partie inférieure de ladite carcasse et une pluralité de courroies de transmission élastiques (41), chacune étant conçue pour transmettre un mouvement de rotation dudit premier moteur électrique (40) audit au moins un rouleau (20) d'un ensemble rouleau (20) respectif, et
dans lequel lesdits seconds moyens d'entraînement (30, 31) comprennent une roue dentée (31) qui est montée rotative autour d'un axe de rotation (Zr) parallèle aux axes de rotation (Za, Zb, Zc, Zd) des ensembles rouleaux (2) et s'engrène avec les dents externes (22) des ensembles rouleaux (2), et un second moteur électrique (30) disposé à l'intérieur de ladite carcasse de type boîte (10) permettant d'entraîner ladite roue dentée (31) en rotation autour de l'axe de rotation respectif (Zr), dans lequel
ledit second moteur électrique (30) est doté d'un arbre d'entraînement coaxial avec l'axe de rotation (Zr) de ladite roue dentée (31).

2. Module selon la revendication 1, dans lequel ledit second moteur électrique (30) est configuré pour entraîner ladite roue dentée (31) en rotation de manière à conférer à chaque ensemble rouleau (2) une rotation dans une plage de sensiblement ±90° autour de l'axe de rotation respectif (Za, Zb, Zc, Zd).

3. Module selon l'une quelconque des revendications précédentes, dans lequel ledit corps de support (21) est creux et chacune desdites courroies de transmission élastiques (41) s'étend à l'intérieur du corps de support (21) de l'ensemble rouleau respectif (2).

4. Module selon la revendication 1 ou la revendication 2, dans lequel lesdits ensembles rouleaux (2) sont au nombre de quatre, dans lequel lesdits premiers moyens d'entraînement (40, 41, 42a, 42b, 43) comprennent en outre un premier arbre (42a) autour duquel sont enroulées une première et une deuxième courroie de transmission élastique de ladite pluralité de courroies de transmission élastiques (41), lesdites première et deuxième courroies de transmission élastiques étant associées à un premier et à un deuxième desdits quatre ensembles rouleaux (2), respectivement, et un second arbre (42b) autour duquel sont enroulées une troisième et une quatrième courroie de transmission élastique de ladite pluralité de courroies de transmission élastiques (41), lesdites troisième et quatrième courroies de transmission élastiques étant associées à un troisième et à un quatrième desdits quatre ensembles rouleaux (2), respectivement, et dans lequel lesdits premier et second arbres (42a, 42b) sont montés rotatifs autour d'axes de rotation respectifs parallèles l'un à l'autre et parallèles audit plan de tri et de transport (P) et sont connectés audit premier moteur électrique (40) pour être entraînés en rotation par ce dernier de manière synchrone et dans le même sens.

5. Module selon l'une quelconque des revendications précédentes, dans lequel ledit second moteur électrique (30) est disposé entre ledit second moteur électrique (40) et lesdits ensembles rouleaux (2), ledit axe de rotation (Zr) de ladite roue dentée (31) étant sensiblement à la même distance desdits axes de rotation (Za, Zb, Zc, Zd).

6. Ligne de tri et de transport de colis (C), comprenant une pluralité de modules (1) selon l'une quelconque des revendications précédentes, disposés les uns à côté des autres.
